# EUROPÄISCHE PATENTANMELDUNG

(11) **EP 3 382 976 A1**
(43) Veröffentlichungstag der Anmeldung: **03.10.2018**
(21) Anmeldenummer: 17163856.2
(22) Anmeldetag: 30.03.2017
(51) Int. Cl.: H04L 29/06, H04W 4/00, G06F 9/445, H04L 29/08

(54) **SCHUTZEINRICHTUNG, VERFAHREN UND GERÄT ENTHALTEN EINE SCHUTZEINRICHTUNG ZUM SCHUTZ EINES MIT DEM GERÄT VERBUNDENEN KOMMUNIKATIONSNETZWERKS**

(71) Anmelder: Siemens Aktiengesellschaft, 80333 München (DE)
(72) Erfinder: Falk, Rainer, 85586 Poing (DE)

(57) **Zusammenfassung**

Gerät enthaltend eine Schutzeinrichtung (203) zum Schutz eines mit dem Gerät (200) verbundenen Kommunikationsnetzwerks vor Angriffen durch das verbundene Gerät (200) selbst, wobei die Schutzeinrichtung (203) separiert von einer Software-Ausführungsumgebung (204) des Gerätes (200) ausgebildet ist und derart eingerichtet ist,
eine bereitgestellte Zugangskennung zu überprüfen,
mindestens eine bereitgestellte Zugangsregel, die den Zugang des Gerätes (200) zum Kommunikationsnetzwerk beschreibt, abhängig von der Zugangskennung zu aktivieren und einen Zugang des Gerätes (200) auf das Kommunikationsnetzwerk zum Senden von Daten gemäß der mindestens einen aktivierten Zugangsregel zu beschränken, sowie ein entsprechendes Verfahren.
Dadurch wird eine Möglichkeit geschaffen potentiell für ein Kommunikationsnetzwerk gefährliche Geräte automatisch zu erkennen und die von Ihnen ausgehende Gefahr zu beseitigen oder zumindest zu minimieren.

## Beschreibung

Die Erfindung betrifft eine Schutzeinrichtung, ein Verfahren, ein Computerprogrammprodukt sowie ein Gerät enthaltend eine Schutzeinrichtung zum Schutz eines mit dem Gerät verbundenen Kommunikationsnetzwerks vor Angriffen durch das Gerät selbst um zu verhindern, dass ein Gerät mit veraltetem Softwarestand andere Geräte oder Systeme über das Netzwerk angreift.

Üblicherweise sind eine Vielzahl von Geräten in einem öffentlichen Datennetzwerk, beispielsweise dem Internet, oder in privaten Datennetzwerken, beispielsweise Industrie-Steuerungsnetzen, und insbesondere in einem Internet of Things, miteinander verbunden. Dabei muss davon ausgegangen werden, dass solche Geräte auch Schwachstellen aufweisen, sodass von Ihnen Angriffe auf andere Geräte oder Systeme über das Datennetzwerk erfolgen können. Insbesondere Geräte mit Softwareanwendungen, die nicht auf dem aktuellen Stand bezüglich Sicherheitsupdates gehalten werden können von Angreifern verwendet werden um Schwachstellen dieser Software auszunutzen und zu manipulieren und damit andere Systeme über das Netzwerk anzugreifen.

Es sind Firewalls als Netzwerkkomponenten bekannt, die den Netzwerkverkehr zwischen Netzwerkbereichen filtern. Um den Netzwerkverkehr eines Gerätes lokal zu filtern, sind "Personal Firewalls" bekannt, durch die das Gerät vor Angriffen vom Netz geschützt werden soll. Sie sind beispielsweise auf einem Linux-basierten Betriebssystem als "IPTables" realisierbar, sodass Sie vom Betriebssystem beziehungsweise von anderer ausgeführter Software aktualisierbar und umkonfigurierbar sind. Daher schützen sie nicht vor Angriffen, die von der Software des Gerätes selbst ausgeht.

Desweiteren ist es bekannt, Firm-/Software-Updates beziehungsweise Patches auf Geräten einzuspielen, durch die Sicherheitslücken in Softwareapplikationen auf dem Gerät geschlossen werden können. Unter Firmware wird im Weiteren Software bezeichnet, die in elektronischen Geräten eingebettet ist. Sie ist zumeist in einem Flash-Speicher, wie beispielsweise einem EPROM, EEPROM oder ROM gespeichert und durch einen Anwender nur mit speziellen Mitteln bzw. Funktionen austauschbar. Als Firmware wird auch eine Betriebssoftware diverser Geräte oder Komponenten als auch eine grundlegende Software eines Computers, wie beispielsweise ein in einem Flash-Speicher verankerte BIOS bei Personalcomputern, bezeichnet, die notwendig ist um den Betriebssystemkern des eigentlichen Betriebssystems laden und betreiben zu können. Die Bezeichnung Firm-/Software wird in der Beschreibung verwendet um auszudrücken, dass der Kontext in dem der Bezeichnung steht gleichermaßen für Firmware und für Software gilt. Ein Firm-/Software-Update bezeichnet somit sowohl eine Aktualisierung der Firmware als auch eine Aktualisierung der Software.

Werden solche Firm-/Software-Updates nicht regelmäßig eingespielt und damit der Softwarestand aktualisiert oder werden keine Updates mehr bereitgestellt, bleiben in einem Gerät bekannte Sicherheitslücken offen. Diese können von Angreifern ausgenutzt werden und zu Angriffen auf andere Geräte im Netzwerk verwendet werden oder auch das Netzwerk an sich lahmlegen.

Es ist somit die Aufgabe der vorliegenden Erfindung eine Möglichkeit zu schaffen, solche potentiell gefährlichen Geräte automatisch zu erkennen und die von Ihnen ausgehende Gefahr zu beseitigen oder zumindest zu minimieren.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Gerät enthaltend eine Schutzeinrichtung zum Schutz eines mit dem Gerät verbundenen Kommunikationsnetzwerks vor Angriffen durch das verbundene Gerät selbst, wobei die Schutzeinrichtung separiert von einer Software-Ausführungsumgebung des Gerätes ausgebildet ist und derart eingerichtet ist eine bereitgestellte Zugangskennung zu überprüfen, mindestens eine bereitgestellte Zugangsregel, die den Zugang des Geräts zum Netzwerk beschreibt abhängig von der Zugangskennung zu aktivieren und den Zugang des Geräts auf das Kommunikationsnetzwerk zum Senden von Daten gemäß der mindestens einen aktivierten Zugangsregel zu beschränken.

Eine Software-Ausführungsumgebung ist beispielsweise eine zentrale Prozessoreinheit, die einen oder auch mehrere Prozessoren enthält, oder einen allgemeine Zone einer zentrale Prozessoreinheit, die beispielsweise über einen Hypervisor auf einer zentralen Prozessoreinheit ausgebildet ist. Durch die Ausbildung einer Schutzeinrichtung separiert von einer Software-Ausführungsumgebung des Gerätes wird sichergestellt, dass die Schutzeinrichtung nicht durch die Software-Ausführungsumgebung des Gerätes selbst manipuliert werden kann. So kann ein Angreifer keine Schwachstellen einer beispielsweise veralteten Software-Ausführungsumgebung ausnutzen um die Schutzeinrichtung zu manipulieren. Durch die bereitgestellte Zugangskennung können sehr flexibel Bedingungen beziehungsweise Zustände der Software-Ausführungsumgebung überprüft und durch unterschiedliche Zugangsregeln darauf reagiert werden, indem der Zugang des Gerätes auf das Kommunikationsnetz, das heißt also das Senden von Daten durch das Gerät über das Kommunikationsnetzwerk an einen Empfänger, beschränkt werden. Das Gerät kann somit beispielsweise aktiv bleiben, darf aber beispielsweise nur noch mit einer beschränkten Senderate oder an eingeschränkte Ziele senden.

Unter einem Kommunikationsnetzwerk ist jegliche Art von Kommunikationsnetzwerk, insbesondere ein Datenübertragungsnetzwerk, für unterschiedliche Verbindungszwecke zu verstehen, das neben einer lokalen Netzwerkstruktur auch weitere angebundene zugängliche Netzwerke, wie beispielsweise ein Büronetz oder ein öffentliches Netz wie das Internet, aber auch ein angebundenes Steuerungs- oder Diagnosenetz umfasst. Insbesondere kann eine lokale Netzwerkstruktur ein Automatisierungsnetz sein oder ein Internet of Things (IoT) Netzwerk sein.

In einer vorteilhaften Ausführungsform ist die Schutzeinrichtung als eine physisch eigenständige, insbesondere im Gerät integrierte, hardwarebasierte Einrichtung ausgebildet.

Dies hat den Vorteil, dass eine räumliche Trennung zwischen der Schutzeinrichtung und Gerätkomponenten, auf denen eine Softwareapplikation ausgeführt wird, vorliegt. So kann die Schutzeinrichtung kaum durch manipulierte Software korrumpiert und Ihre Schutzfunktion ausgehebelt werden.

In einer vorteilhaften Ausführungsform wählt die Schutzeinrichtung eine Zugangsregel abhängig vom Inhalt der Zugangskennung und/oder abhängig von der Zeitdauer seit einer letzten Bereitstellung oder Aktualisierung der Zugangskennung aus.

So kann beispielsweise in einer Zugangskennung ein bestimmter Gerätestatus mitgeteilt werden, beispielsweise Gerät befindet sich im Diagnosemodus, und entsprechend das Senden von Daten in das Kommunikationsnetzwerk stärker beschränkt werden. Diese stärkere Beschränkung wird durch eine entsprechende Zugangsregel umgesetzt. Dies ermöglicht eine sehr flexible Steuerung der Zugangsregeln je nach Geräte- oder auch Netzwerkzustand. Andererseits kann auch alternativ oder parallel zum Inhalt der Zugangskennung die Zeitdauer seit der Bereitstellung oder Aktualisierung der Zugangskennung zur Bestimmung der Zugangsregel verwendet werden. Beispielsweise aktiviert die Schutzvorrichtung eine Zugangsregel mit offener Policy, also ohne oder geringer Zugangsbeschränkung, wenn eine aktuelle Zugangskennung vorliegt. Bei Nicht-Vorliegen einer aktuellen Zugangskennung wird eine Zugangsregel mit restriktiver Policy aktiviert. Das Vorliegen einer aktuellen oder eben nicht aktuellen Zugangskennung kann beispielsweise durch eine in der Zugangskennung enthaltene Angabe zur Gültigkeitsdauer der Zugangskennung bestimmt werden. Die Aktualität einer Zugangserkennung kann aber auch abhängig von der Zeitdauer seit der letzten Aktualisierung festgelegt sein.

In einer vorteilhaften Ausführungsform stellt die Schutzeinrichtung eine Zugangskennung abhängig von Firm-/Software-Aktualisierungsstand des Geräts bereit.

Durch die Information über den Firm-/Software-Aktualisierungszustand können gezielt Geräte mit veralteter Firm-/Software beziehungsweise Software in Ihrem Sendeverhalten eingeschränkt werden.

In einer vorteilhaften Ausführungsform weist die Schutzeinrichtung eine erste Überwachungseinheit auf, die derart ausgebildet ist, vom Gerät empfangene Daten nach Information zu verfügbaren Firm-/Software-Aktualisierungen zu überwachen und den Firm-/Software-Aktualisierungsstand durch Vergleich mit der im Gerät aktiven Firm-/Software zu ermitteln.

Durch die Überwachung der Netzwerkschnittstelle eines Gerätes können eintreffende Hinweismeldungen, dass aktualisierte Softwareversionen vorliegen, abgegriffen werden. Somit kann der Aktualisierungsstand automatisch ohne aktives Zutun des Gerätes selbst oder vom Wartungspersonal ermittelt werden.

In einer weiteren Ausführungsform weist die Schutzeinrichtung eine zweite Überwachungseinheit auf, die derart ausgebildet ist, einen Schreibzugriff auf eine Firm-/Software-Speichereinrichtung, beispielsweise einen Flashspeicher für auf einem Gerät aktive Software, zu überwachen und bei erfolgreicher Firm-/Software-Aktualisierung den Firm-/Software-Aktualisierungsstand zu ermitteln. Insbesondere umfassen aktualisierte Versionen einer Software häufig eine kryptographische Signatur, aus der eine Versionsinformation der Software ermittelbar ist. Mit dieser Methode kann ebenfalls die Schutzeinrichtung selbsttätig, ohne aktives Zutun des Gerätes oder von Wartungspersonal der Aktualisierungsstand ermittelt werden.

In einer vorteilhaften Ausführungsform ist die Schutzeinrichtung derart ausgebildet, die Zugangskennung von einer vom Gerät physisch getrennten Aktualisierungsvorrichtung zu empfangen.

Im Gegensatz zur vorher beschriebenen Bereitstellungsarten, die durch die Schutzeinrichtung selbst erfolgte, kann somit auch eine Zugangskennung von beispielsweise einem externen Server empfangen werden. Dies ermöglicht es, von einer zentralen Stelle aus Geräte gezielt in ihrem Netzzugang zu beschränken. Beispielsweise kann das Gerät vom Netz genommen werden, indem durch die gesendete Zugangskennung eine Zugangsregel aktiviert wird, die ein Senden von Nachrichten in das Kommunikationsnetzwerk komplett.

In einer vorteilhaften Ausführungsform enthält die Zugangskennung selbst eine anzuwendende Zugangsregel, die von der Schutzeinrichtung direkt aktivierbar ist.

Dies ermöglicht einen direkten Zugriff auf die Zugangssteuerrung im Gerät. Dadurch kann eine kurzfristige Umsetzung der Zugangsregel erreicht werden.

In einer vorteilhaften Ausführungsform beschränkt die Schutzeinrichtung ausgehende Kommunikationsverbindungen bezüglich einer Zieladresse, einem zu verwendenden Kommunikationsprotokoll, einem Port, einer Senderate oder einem Datenvolumen.

Dies hat den Vorteil, dass sehr unterschiedliche Zugangsbeschränkungen umgesetzt werden können und ein beispielsweise nicht mehr aktuelles Gerät nicht komplett abgeschaltet werden muss, sondern weiterhin ansprechbar bleiben kann. Es kann dennoch ein Aussenden von Daten an kritische Kommunikationspartner verhindert werden oder beispielsweise ein Senden größerer Datenvolumen, mit denen ein Netz lahmgelegt werden könnte, verhindert werden.

Ein weiterer Aspekt der vorliegenden Erfindung betrifft eine Schutzeinrichtung, die separiert von einer Software-Ausführungsumgebung eines Gerätes in ein mit einem Kommunikationsnetzwerk verbundenes Gerät einbaubar oder mit diesem verbindbar ist und derart ausgebildet ist, eine bereitgestellte Zugangskennung zu prüfen, mindestens eine bereitgestellte Zugangsregel, die den Zugang des Geräts zum Netzwerk beschreibt, abhängig von der Zugangskennung zu aktivieren und einen Zugang des Geräts auf das Kommunikationsnetzwerk zum Senden von Daten gemäß der aktivierten Zugangsregel zu beschränken.

Die Schutzeinrichtung selbst ist dabei unabhängig von der Software-Ausführungsumgebung des Gerätes und somit nicht durch manipulierte Software aushebelbar.

Ein weiterer Aspekt der vorliegenden Erfindung ist ein Verfahren zum Schutz eines Kommunikationsnetzwerks vor Angriffen durch ein mit dem Kommunikationsnetz verbundenes Gerät mit den Schritten: Überprüfen einer im Gerät bereitgestellten Zugangskennung in einer von einer Software-Ausführungsumgebung des Geräts separierten Schutzeinrichtung des Gerätes, Aktivieren einer bereitgestellten Zugangsregel abhängig von der Zugangskennung, wobei die Zugangsregel den Zugang des Gerätes zum Netzwerk beschreibt, und Beschränken eines Zugang des Gerätes auf das Kommunikationsnetzwerk zum Senden von Daten gemäß zumindest einer aktivierten Zugangsregel.

In einer vorteilhaften Ausführungsform wird die Zugangsregel abhängig vom Inhalt der Zugangskennung und/oder von Zeitdauer seit einer letzten Aktualisierung der Zugangskennung ausgewählt.

In einer weiteren vorteilhaften Ausführungsform wird eine aktualisierte Zugangskennung abhängig von einem Firm-/Software-Aktualisierungsstand bereitgestellt.

In einer weiteren vorteilhaften Ausführungsform werden vom Gerät empfangene Daten nach Information zu verfügbaren Firm-/Software-Aktualisierungen überwacht und der Firm-/Software-Aktualisierungsstand durch Vergleich mit der im Gerät implementierten Firm-/Software ermittelt und/oder ein Schreib-Zugriff auf eine Firm-/Software-Speichereinrichtung überwacht und bei erfolgreicher Firm-/Software-Aktualisierung der Firm-/Software-Aktualisierungsstand insbesondere aus einer Signatur der Firm-/Software-Aktualisierung ermittelt.

In einer vorteilhaften Ausführungsform wird die Zugangskennung von einer vom Gerät physisch getrennten Aktualisierungsvorrichtung empfangen, wobei die bereitgestellte Zugangskennung selbst eine anzuwendende Zugangsregel enthält und die anzuwendende Zugangsregel von der Schutzeinrichtung aktiviert wird.

In einer vorteilhaften Ausführungsform wird die Zugangskennung mit einer kryptographisch geschützten Prüfsumme geschützt bereitgestellt.

Dies hat den Vorteil, dass der Sender beziehungsweise die bereitstellende Einheit vom Gerät authentisiert werden kann und auch die Integrität der Zugangskennung überprüft werden kann. So wird sichergestellt, dass im Gerät nur eine unverändert übertragene Zugangskennung, die von einem erlaubten Sender bereitgestellt wurde, akzeptiert und bearbeitet wird.

Ein weiterer Aspekt der Erfindung betrifft ein Computerprogrammprodukt, das direkt in einem Speicher eines digitalen Computers ladbar ist, umfassend Programmcodeteile, die dazu geeignet sind die Schritte des vorgenannten Verfahrens durchzuführen.

Ausführungsbeispiele der Erfindung sind in den Zeichnungen beispielhaft dargestellt und werden anhand der nachfolgenden Beschreibung näher erläutert. Es zeigen:
- Figur 1: ein Ausführungsbeispiel eines Kommunikationsnetzwerks mit mehreren erfindungsgemäßen Gerätes in schematischer Darstellung;
- Figur 2: ein Ausführungsbeispiel des erfindungsgemäßen Verfahrens als Ablaufdiagramm;
- Figur 3: ein erstes Ausführungsbeispiel eines erfindungsgemäßen Gerätes mit einer erfindungsgemäßen Schutzeinrichtung in Form einer ins Gerät integrierten Hardware-basierten Schutzeinrichtung in schematischer Darstellung;
- Figur 4: ein zweites Ausführungsbeispiel eines erfindungsgemäßen Gerätes mit einer erfindungsgemäßen Ausführungsform einer Schutzeinrichtung, die auf einer von der Software-Ausführungsumgebung des Gerätes unabhängigen Partition einer Prozessoreinheit ausgebildet ist in schematischer Darstellung;
- Figur 5: ein Ausführungsbeispiel einer erfindungsgemäßen Schutzeinrichtung in schematischer Darstellung.

Einander entsprechende Teile sind in allen Figuren mit den gleichen Bezugszeichen versehen.

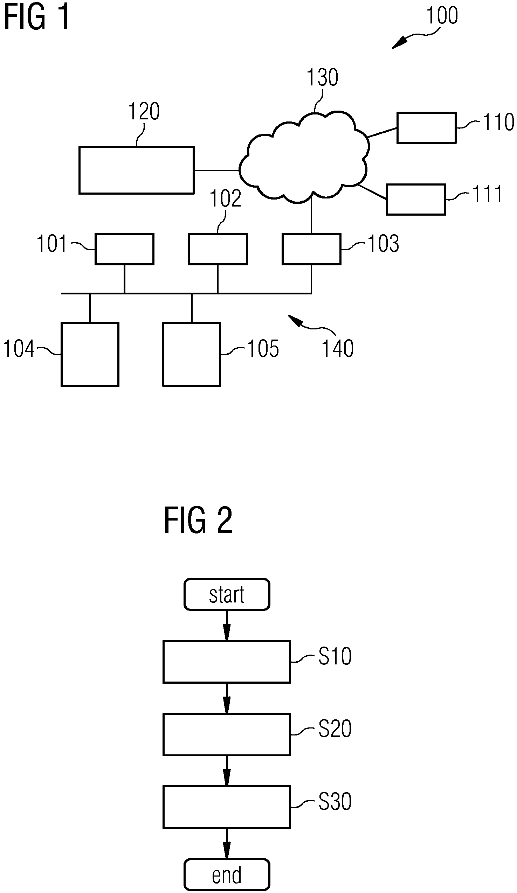

Figur 1 zeigt ein Kommunikationsnetzwerk 100 mit einem lokalen Automatisierungsnetzwerk 140. Mit dem Automatisierungsnetzwerk 140 sind beispielsweise ein Steuergerät 104, eine Überwachungsvorrichtung 105 und Geräte 101 und 102 mit dem verbunden. Die Geräte 101, 102 sind beispielsweise als Feldgeräte ausgebildet, die Sensoren oder Aktoren bereitstellen. Solche Geräte 101, 102 stellen Daten bereit, die über das Automatisierungsnetzwerk 140 an andere Geräte oder Steuerungsgeräte 104 oder eine Überwachungsvorrichtung 105 oder auch über eine Übergangsvorrichtung 103 an andere empfangende Geräte übermitteln. Weitere Geräte 110, 111 sind mit einem offenen Netzwerk 130 beispielsweise über eine Mobilfunkanbindung oder einen DSL-Anschluss direkt verbunden.
Des Weiteren ist eine Aktualisierungsvorrichtung 120 beispielsweise mit dem offenen Netz 130 verbunden. Diese Geräte 110, 111 und die Aktualisierungsvorrichtung 120 können über das offene Netzwerk 130 und die Übergangsvorrichtung 130 mit dem Automatisierungsnetzwerk 140 kommunizieren.

Jedes Gerät 101, 102, 110, 111, Steuerungsgerät 104 oder Überwachungseinheit 105 kann Schwachstellen aufweisen, sodass von ihnen aus Angriffe auf ein oder mehrere andere Geräte oder das Kommunikationsnetz als Ganzes, beispielsweise durch Überlast mit einem Denial-of-Service Angriff, ausgehen können. Insbesondere weniger komplexe Geräte 101, 102, 110, 111, die beispielsweise in großer Anzahl mit dem Netzwerk 100 verbunden, stellen eine Gefahr dar, insbesondere wenn sie nicht regelmäßig gewartet werden oder wenn keine Updates (Patche) mehr bereitgestellt werden. Dies gilt nicht nur für Automatisierungsnetzwerke, sondern insbesondere für ein Internet of Things, in dem verschiedenste private oder sonstige Geräte wie intelligente Haushaltsgeräte oder Sensoren Daten über offene Netzwerke übertragen.

Um ein solches Kommunikationsnetz 100 vor einem Angriff zu schützen müssen alle angebundenen Geräte und sonstigen Komponenten auf dem neuesten Sicherheitsstandard gehalten werden, um erkannte Sicherheitslücken zu schließen. Üblicherweise werden dazu im Netzwerk aktualisierte Versionen von Anwendungsprogrammen oder sonstigen Softwarepaketen wie Betriebssystemen usw. bereitgestellt, die regelmäßig in die Geräte 101, 102, 110, 111 sowie auch in die Steuerungsgeräte 104 oder Überwachungseinheiten 105 eingespielt werden sollten. Insbesondere Geräte, die solche Softwareupdates nicht regelmäßig durchführen, können manipuliert werden und andere Geräte über das Kommunikationsnetzwerk.

Durch das erfindungsgemäße Verfahren, wie in Figur 2 dargestellt, wird verhindert, dass ein manipuliertes Gerät 101, 102, 110, 111 andere Geräte innerhalb des Automatisierungsnetzwerks 100 oder auch am offenen Netzwerk 130 angebundene Systeme angreift.

Zum Schutz des Kommunikationsnetzwerks vor Angriffen durch ein mit dem Kommunikationsnetzwerk 100 verbundenes Gerät 101, 102, 110, 111 umfasst ein jedes Gerät 101, 102, 110, 111 und optional auch jede weitere ins Netzwerk sendende Komponente, wie das Steuergerät 104 oder die Überwachungseinheit 105, eine Schutzeinrichtung. Diese Schutzeinrichtung ist in einer von einer Software-Ausführungsumgebung des Gerätes separierten Umgebung des Geräts implementiert.

In einem ersten Schritt S10 wird in dieser Schutzeinrichtung eine dem Gerät bereitgestellte Zugangskennung überprüft. Abhängig von der Zugangskennung wird im Schritt S20 eine bereitgestellte Zugangsregel, die den Zugang des Geräts zum Netzwerk beschreibt, aktiviert. Anschließend, siehe S30, wird der Zugang des Geräts auf das Kommunikationsnetzwerk, das heißt das Senden von Daten vom Gerät über das Netzwerk an einen Empfänger, gemäß der mindestens einen Aktivitäten-Zugangsregel beschränkt.

Eine erste Zugangskennung kann beispielsweise bei der Herstellung eines Geräts oder bei der Integration des Geräts in ein Netzwerk beispielsweise durch den Hersteller oder den Betreiber des Kommunikationsnetzwerks dem Gerät bereitgestellt werden. Die mindestens eine Zugangsregel kann abhängig vom Inhalt der Zugangskennung und/oder von der Zeitdauer seit einer letzten Bereitstellung oder Aktualisierung der Zugangskennung ausgewählt und aktiviert werden. Vorzugsweise wird eine Zugangskennung mittels einer kryptographischen Prüfsumme geschützt, so dass die Identität des Inhalts der Zugangskennung als auch ein Sender beziehungsweise eine bereitstellende Einheit der Zugangskennung überprüft werden können.

Im Gerät selbst kann durch die Schutzvorrichtung beispielsweise eine aktualisierte Zugangskennung abhängig vom Firmwarebeziehungsweise Software-Aktualisierungsstand des Gerätes bereitgestellt werden. Der Aktualisierungsstand kann beispielsweise dadurch ermittelt werden, dass vom Gerät selbst empfangene Daten auf Information zu verfügbaren Firm- beziehungsweise Software-Aktualisierungen überwacht werden und mit dem Software- beziehungsweise Firmwarestand, der im Gerät implementiert ist, verglichen wird. Alternativ oder auch parallel dazu kann ein Schreib-Zugriff auf eine Speichereinrichtung, die entsprechende Firm- oder Software abspeichert, überwacht werden. Insbesondere kann aus einer Signatur der Firmware- beziehungsweise Software-Aktualisierung die Version der Firmbeziehungsweise Software ermittelt werden.

So kann bei einer detektierten Software-Aktualisierung eine aktualisierte Zugangskennung der Schutzvorrichtung bereitgestellt werden. Wenn der Schutzvorrichtung eine aktuelle Zugangskennung in vorliegt, wird eine offene Zugangsregel aktiviert. Bei Nichtvorliegen einer aktuellen Zugangskennung wird eine restriktive Zugangsregel aktiviert. Weiterhin kann abhängig von der Zeitdauer seit der letzten Aktualisierung der Zugangskennung, beispielsweise mit längerer Zeitdauer seit der letzten Aktualisierung, eine stärker einschränkende restriktive Zugangsregel aktiviert werden.

Zugangsregeln können insbesondere Beschränkungen bezüglich erlaubten Zieladressen oder Ausgangsports einer Kommunikationsverbindung, der erlaubten Kommunikationsprotokolle oder eine Senderate, beispielsweise eine Anzahl von Paketen je Sekunde oder ein maximales in das Netz übermittelbare Datenvolumen betreffen.

Die Zugangsregeln können dabei entweder fest dem Gerät vorgegeben sein oder auch geändert werden. So können Zugangsregeln beispielsweise in einem Wartungsprozess aktualisiert oder ersetzt werden. Die Zugangskennung kann nicht nur durch das Gerät selbst ermittelt und bereitgestellt werden, sondern auch durch eine vom Gerät physisch getrennte Aktualisierungsvorrichtung an das Gerät übermittelt werden. Die Zugangskennung selbst kann eine oder mehrere Zugangsregeln enthalten, so dass durch die Zugangskennung die Zugangsregeln geändert werden können beziehungsweise dem Gerät geänderte Zugangsregeln bereitgestellt werden. So kann beispielsweise eine in Figur 1 als Aktualisierungsvorrichtung 120 dargestellte Vorrichtung eine solche Zugangskennung an das Gerät 101, 102, 110, 111 übermitteln. Die Zugangskennung kann dabei beispielsweise eine Beschränkung des Geräts auf eine bestimmte Zugangsrate oder aber auch ein komplettes Sendeverbot übermittelt werden.

Ein Gerät mit einer solchen Schutzeinrichtung kann nicht nur ein Feldgerät oder einfach strukturiertes Gerät innerhalb eines Internet of Things sein, sondern auch ein Steuergerät, ein Steuerrechner oder ein Mobilgerät sein. Die Erfindung kann auch auf Rechnersysteme und Netzwerkkomponenten wie Router oder Switches realisiert werden.

Insbesondere kann das Verfahren als ein Computerprogrammprodukt direkt in einen Speicher eines digitalen Computers geladen werden und Programmcodeteile umfassen, die dazu geeignet sind, das beschriebene Verfahren durchzuführen.

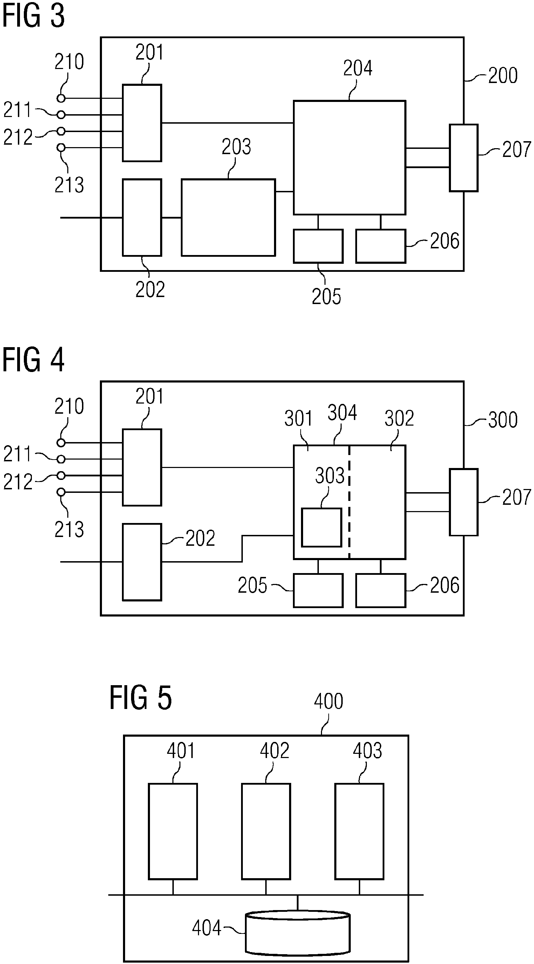

In Figur 3 und 4 sind Geräte 200, 300 mit unterschiedlichen Ausführungsformen einer Schutzeinrichtung 203, 303 dargestellt. Figur 3 zeigt das Gerät 200 mit einer zentralen Prozessoreinheit 204, die beispielsweise aus Mikroprozessoren gebildet wird. Von der zentralen Prozessoreinheit 204 werden Softwareprogramme ausgeführt, die in einer persistenten, überschreibbaren Speichereinrichtung 206, die beispielsweise als Flashspeicher ausgebildet ist, abgelegt sind und zur Ausführung in die zentrale Prozessoreinheit geladen werden. Das Gerät 200 weist weiterhin einen flüchtigen Arbeitsspeicher 205, eine Netzwerkschnittstelle 202 und eine Ein-/Ausgabeeinheit 201 auf, an die Peripheriegeräte wie beispielsweise Sensoren 210, 211 oder Aktoren 212, 213, anschließbar sind. Über eine USB-Schnittstelle 207 ist beispielsweise die in der Speichereinrichtung 206 abgelegte Software oder Firmware aktualisierbar.

Das Gerät 200 weist insbesondere einen Schutzeinrichtung 203 auf, die als eigenständige Hardware-basierte Einrichtung ausgebildet ist und im Gerät eingebaut ist. Diese Schutzeinrichtung 203 ist dabei von einer Software-Ausführungsumgebung des Gerätes 200, die auf der zentralen Prozessoreinheit 204 ausgebildet ist, separiert und kann somit nicht durch die Software selbst in ihrer Funktionsweise beeinflusst oder geändert werden. Die Schutzeinrichtung 203 ist mit der Netzwerkschnittstelle 202 des Gerätes 200 verbunden und kann somit die Netzwerkkommunikation des Gerätes 200, das heißt insbesondere das Senden von Daten an ein anderes Gerät beziehungsweise an einen anderen beliebigen Empfänger beschränken. Die Schutzeinrichtung 203 ist fest, das heißt nicht durch die auf dem Prozessor ausgeführte Software/Firmware konfigurierbar oder änderbar. Dadurch ist eine solche als Hardware-Firewall ausgebildete Schutzeinrichtung 203 auch dann wirksam, wenn die Software/Firmware manipuliert ist.

Eine solche Hardware-basierte Schutzeinrichtung 203 kann beispielsweise als Funktionalität in einem Halbleiter-basierten integrierten Schaltkreis, beispielsweise als Anwendungsspezifische integrierte Schaltung (ASIC) oder einer in Feld programmierbaren Gatteranordnung (FPGA) oder als Funktionsblock in einem als System-on-Chip bezeichneten Baustein realisiert sein. Eine System-on-Chip umfasst eine im Feld programmierbare Gatteranordnung sowie eine integrierte Schaltung, insbesondere auf einem separierten Baustein, oder auch Chip genannt, in dem Funktionen für ein Netzwerk-Interface bereitgestellt werden. Sie kann jedoch auch in einem separaten Kommunikationsbaustein beziehungsweise Kommunikationsmodul, wie beispielsweise einem UMTS-Modem oder in einem Software-programmierbaren Baustein wie Microcontroller oder Cryptocontroller, realisiert sein.

In Figur 4 ist ein Gerät 300 mit einer Schutzeinrichtung 303 dargestellt, wobei die Sicherheitseinrichtung 303 in einer zentralen Prozessoreinheit 304 mit einem Hypervisor als Software-basierter Funktion in einer separaten sicheren Domäne 301 realisiert ist, die durch den Hypervisor von der sonstigen regulären Software, die in einer allgemeinen Zone 302 der zentralen Prozessoreinheit ausgeführt wird, separiert sein.

In einer Variante kann die zentrale Prozessoreinheit 204, 304 beziehungsweise die allgemeine Zone 302 mit der Software-Ausführungsumgebung der zentralen Prozessoreinheit 304, eine kryptographisch geschützte Zugangskennung, auch als Freischalt-Token oder Network-Access-Token bezeichnet, der Hardware-Schutzeinrichtung 203, 303 bereitstellen. Die Zugangskennung wird insbesondere von einer in Figur 2 dargestellten Aktualisierungsvorrichtung 120 als Backend Device Security Service bereitgestellt und auf der Schutzeinrichtung 203, 303 geprüft. Dadurch kann die zentrale Prozessoreinheit 204, 304, beziehungsweise die allgemeine Zone 302 mit der Software-Ausführungsumgebung der zentralen Prozessoreinheit 304, beziehungsweise die darauf ausgeführte Software beziehungsweise Firmware, eine empfangene Zugangskennung zwar weiterreichen, aber nicht unbemerkt manipulieren. Dadurch kann die Aktualisierungsvorrichtung 120 die Netzwerkschnittstelle 202 temporär freischalten, das heißt statt einer restriktiven Zugangsregel, eine weniger restriktive Zugangsregel aktivieren. Die Aktualisierungsvorrichtung 120 kann zum Beispiel eine Gerätekonfiguration oder einen Firmware-Stand prüfen, die zum Beispiel ihn einem Gerätemanagement-Server beziehungsweise einer Gerätemanagement-Datenbank auf einem solchen Gerätemanagement-Server hinterlegt ist.

Abhängig von der Zugangskennung wird eine von mehreren vordefinierten Zugangsregeln aktiviert. In einer anderen Variante enthält eine Zugangskennung eine Zugangsregel, die statt einer hinterlegten Zugangsregel konfiguriert wird.

In einer anderen Variante wird der Schreibzugriff auf eine Flash-Speichereinrichtung 206 überwacht. Ein Aktualisieren des Firmware-Images, das heißt ein Schreibzugriff auf den Speicherbereich der Firmware, führt dazu, dass temporär eine weniger restriktive Zugangsregel aktiviert wird. Wenn ein sicheres Firmware- beziehungsweise Software-Update realisiert ist, bei dem nur korrekt signierte, aktuellere Firmware-/Hardware-Versionen einspielbar sind, so wird damit erreicht, dass nur dann eine weniger restriktive Zugangsregel erhalten bleibt, wenn regelmäßig ein Firmware- beziehungsweise Software-Update erfolgt.

Eine Zugangskennung kann zum Beispiel durch eine digitale Signatur oder durch einen symmetrischen, kryptographischen Nachrichten-Authentifizierungscode, auch Message-Authentication-Code (MAC) genannt, geschützt sein. Dazu kann zum Beispiel ein Rivest-Shamir-Adelmann-Cryptosystem (RSA), ein digitaler Signatur-Algorithmus (DSA), ein elliptischer Kurven-Algorithmus für digitale Signaturen (ECDSA), kryptographische Nachrichten-Zugangscodes (HMAC), oder ein AES-CBC MAC-Algorithmus verwendet werden.

Figur 5 zeigt einer Ausführungsform einer erfindungsgemäßen Schutzeinrichtung 400 mit einer ersten Überwachungseinheit 401, die vom Gerät 200, 300 empfangene Daten beispielsweise über die Netzwerkschnittstelle 202 überwacht. Die erste Überwachungseinheit 401 ist derart ausgelegt, eine Zugangskennung, die von einer vom Gerät 200, 300 physisch getrennten Aktualisierungsvorrichtung 120 gesendet und beispielsweise über die Netzwerkschnittstelle 202 empfangen wurde, zu empfangen. Die Schutzvorrichtung 400 umfasst weiter eine zweite Überwachungseinheit 403, die einen Schreibzugriff auf eine Firmware- beziehungsweise Software-Speichereinrichtung 206 des Gerätes 200, 300 überwacht und beispielsweise aus einer Signatur der Software-Aktualisierung den Aktualisierungsstand der Firm- beziehungsweise Software ermittelt.

Die Schutzeinrichtung 400 weist des Weiteren eine Überprüfungseinheit 402 und eine Speichereinheit 404 auf. Über die Speichereinheit 404 werden die mindestens eine Zugangskennung sowie die mindestens eine Zugangsregel der Überprüfungseinheit 402 bereitgestellt. In der Überprüfungseinheit 402 wird der Zugang des Geräts 101, 102, 110, 111, 200, 300 zum Kommunikationsnetzwerk 100 anhand der aktuellen Zugangskennung und der Zugangsregeln geprüft und beschränkt. Die Überprüfung kann beispielsweise beim Aufbau einer Kommunikationsverbindung, bei der das Gerät 101, 102, 110, 111, 200, 300 Daten über das Kommunikationsnetzwerk 100 sendet, ausgeführt werden. Die Überprüfung kann aber auch beim Empfang einer aktualisierten Zugangskennung ausgeführt und entsprechende Zugangsregeln aktiviert werden. Die Überprüfungseinheit 402 ist dahingehend ausgelegt, eine Zeitdauer seit der letzten Aktualisierung der Zugangskennung zu überwachen, bzw. eine in der bzw. für die Zugangskennung bereitgestellte Gültigkeitsdauer zu überwachen.

Alle beschriebenen und/oder gezeigten Merkmale können im Rahmen der Erfindung vorteilhaft miteinander kombiniert werden. So ist die Erfindung in jeglicher Art von Kommunikationsnetz einsetzbar und nicht auf Geräte in einem Automatisierungsnetz begrenzt. Eine erfindungsgemäße Schutzvorrichtung kann in jeder Art von Gerät, das Daten über ein Netzwerk senden kann, implementiert werden. Die Erfindung ist nicht auf die beschrieben Ausführungsbeispiele beschränkt.

## Patentansprüche

1. Gerät enthaltend eine Schutzeinrichtung (203, 303, 400) zum Schutz eines mit dem Gerät (101, 102, 110, 111, 200, 300) verbundenen Kommunikationsnetzwerks (100) vor Angriffen durch das verbundene Gerät (101, 102, 110, 111, 200, 300) selbst, wobei
die Schutzeinrichtung (203, 303, 400) separiert von einer Software-Ausführungsumgebung (204, 301) des Gerätes (101, 102, 110, 111, 200, 300) ausgebildet ist und derart eingerichtet ist
eine bereitgestellte Zugangskennung zu überprüfen, mindestens eine bereitgestellte Zugangsregel, die den Zugang des Gerätes (101, 102, 110, 111, 200, 300) zum Kommunikationsnetzwerk (100) beschreibt, abhängig von der Zugangskennung zu aktivieren und einen Zugang des Gerätes (101, 102, 110, 111, 200, 300) auf das Kommunikationsnetzwerk (100) zum Senden von Daten gemäß der mindestens einen aktivierten Zugangsregel zu beschränken.

2. Gerät nach Anspruch 1, wobei die Schutzeinrichtung(203, 303, 400) als eine eigenständige, insbesondere im Gerät (101, 102, 110, 111, 200, 300) integrierte, Hardware-basierte Einrichtung ausgebildet ist.

3. Gerät nach einem der vorangehenden Ansprüche, wobei die Schutzeinrichtung (203, 303, 400) eine Zugangsregel abhängig vom Inhalt der Zugangskennung und/oder von der Zeitdauer seit einer letzten Bereitstellung oder Aktualisierung der Zugangskennung auswählt.

4. Gerät nach einem der vorhergehenden Ansprüche, wobei die Schutzeinrichtung (203, 303, 400) eine Zugangskennung abhängig vom Firm-/Software-Aktualisierungsstand des Geräts (101, 102, 110, 111, 200, 300) bereitstellt.

5. Gerät nach Anspruch 4, wobei die Schutzeinrichtung (203, 303, 400) eine erste Überwachungseinheit (401) aufweist, die derart ausgebildet ist vom Gerät (101, 102, 110, 111, 200, 300) empfangene Daten nach Information zu verfügbaren -Aktualisierungen zu überwachen und den Firm-/Software-Aktualisierungsstand durch Vergleich mit der im Gerät (101, 102, 110, 111, 200, 300) implementierte Firm-/Software zu ermitteln.

6. Gerät nach Anspruch 4 oder 5, wobei die Schutzeinrichtung (203, 303, 400) eine zweite Überwachungseinheit (403) aufweist, die derart ausgebildet ist, einen Schreib-Zugriff auf eine Firm-/Software-Speichereinrichtung (206) zu überwachen und bei erfolgreicher Firm-/Software-Aktualisierung den Firm-/Software-Aktualisierungsstand, insbesondere aus einer Signatur der Firm-/Software-Aktualisierung, zu ermitteln.

7. Gerät nach einem der vorhergehenden Ansprüche, wobei die Schutzeinrichtung (203, 303, 400) derart ausgebildet ist, die Zugangskennung von einer vom Gerät physisch getrennten Aktualisierungsvorrichtung (120) zu empfangen.

8. Gerät nach Anspruch 7, wobei die bereitgestellte Zugangskennung selbst eine anzuwendende Zugangsregel enthält, und die Schutzeinrichtung (203, 303, 400) die anzuwendende Zugangsregel aktiviert.

9. Gerät nach einem der vorhergehenden Ansprüche, wobei die Schutzeinrichtung (203, 303, 400) die Zugangsregel auf ausgehende Kommunikationsverbindungen anwendet und die Kommunikationsverbindung bezüglich mindestens einem Kommunikationsparameter, insbesondere einer Zieladresse, einem verwendeten Kommunikationsprotokoll, einem Port, einer Senderate oder einem Datenvolumen, beschränkt.

10. Schutzeinrichtung, die separiert von einer Software-Ausführungsumgebung (204, 301) eines Gerätes (101, 102, 110, 111, 200, 300) in ein mit einem Kommunikationsnetzwerk (100) verbundenes Gerät (101, 102, 110, 111, 200, 300) einbaubar ist, und derart ausgebildet ist eine bereitgestellte Zugangskennung zu überprüfen, mindestens eine bereitgestellte Zugangsregel, die den Zugang des Gerätes (101, 102, 110, 111, 200, 300) zum Kommunikationsnetzwerk (100) beschreibt, abhängig von der Zugangskennung zu aktivieren und einen Zugang des Gerätes (101, 102, 110, 111, 200, 300) auf das Kommunikationsnetzwerk zum Senden von Daten gemäß der aktivierten Zugangsregel zu beschränken.

11. Schutzeinrichtung nach Anspruch 10, die als eine eigenständige, insbesondere in das Gerät (101, 102, 110, 111, 200, 300) einbaubare oder mit dem Gerät (101, 102, 110, 111, 200, 300) verbindbare, Hardware-basierte Einrichtung (203) ausgebildet ist.

12. Verfahren zum Schutz eines Kommunikationsnetzwerks (100) vor Angriffen durch ein mit dem Kommunikationsnetzwerk (100) verbundenes Gerät (101, 102, 110, 111, 200, 300) mit den Schritten:
Überprüfen (S10) einer dem Gerät (101, 102, 110, 111, 200, 300) bereitgestellten Zugangskennung in einer von einer Software-Ausführungsumgebung (204, 302) des Gerätes (101, 102, 110, 111, 200, 300) separierten Schutzeinrichtung (203, 303, 400) des Geräts,
Aktivieren (S20) einer bereitgestellten Zugangsregel, die den Zugang des Gerätes (101, 102, 110, 111, 200, 300) zum Netzwerk (100) beschreibt, abhängig von der Zugangskennung, und
Beschränken (S30) eines Zugangs des Gerätes (101, 102, 110, 111, 200, 300) auf das Kommunikationsnetzwerk (100) zum Senden von Daten gemäß der mindestens einen aktivierten Zugangsregel.

13. Verfahren nach einem der vorhergehenden Ansprüche, wobei die Zugangsregel abhängig vom Inhalt der Zugangskennung und/oder von der Zeitdauer seit einer letzten Bereitstellung oder Aktualisierung der Zugangskennung ausgewählt wird.

14. Verfahren nach einem der vorhergehenden Ansprüche, wobei eine Zugangskennung abhängig von einem Firm-/Software-Aktualisierungsstand des Geräts (101, 102, 110, 111, 200, 300) bereitgestellt wird.

15. Verfahren nach Anspruch 14, wobei vom Gerät (101, 102, 110, 111, 200, 300) empfangene Daten nach Information zu verfügbaren Firm-/Software-Aktualisierungen überwacht werden und der Firm-/Software-Aktualisierungsstand durch Vergleich mit der im Gerät (101, 102, 110, 111, 200, 300) implementierte Firm-/Software ermittelt wird und/oder einen Schreib-Zugriff auf eine Firm-/Software-Speichereinrichtung (206) überwacht und bei erfolgreicher Firm-/Software-Aktualisierungen der Firm-/Software-Aktualisierungsstand, insbesondere aus einer Signatur der Firm-/Software-Aktualisierung, ermittelt wird.

16. Verfahren nach Anspruch 11, wobei die Zugangskennung von einer vom Gerät (101, 102, 110, 111, 200, 300) physisch getrennten Aktualisierungsvorrichtung (120) empfangen wird.

17. Verfahren nach einem der vorhergehenden Ansprüche, wobei die Zugangskennung mit einer kryptographisch geschützten Prüfsumme geschützt bereitgestellt wird.

18. Computerprogrammprodukt, das direkt in einen Speicher eines digitalen Computers ladbar ist, umfassend Programmcodeteile, die dazu geeignet sind, die Schritte des Verfahrens nach einem der Ansprüche 12 bis 17 durchzuführen.
